Europäisches Patentamt

European Patent Office

Office européen des brevets

(19)

(11) **EP 0 662 274 B1**

(12) **EUROPÄISCHE PATENTSCHRIFT**

(45) Veröffentlichungstag und Bekanntmachung des Hinweises auf die Patenterteilung:
**15.10.1997 Patentblatt 1997/42**

(21) Anmeldenummer: **94924786.0**

(22) Anmeldetag: **19.07.1994**

(51) Int Cl.[6]: **H04N 9/31**, G02B 13/00

(86) Internationale Anmeldenummer:
**PCT/EP94/02377**

(87) Internationale Veröffentlichungsnummer:
**WO 95/03676 (02.02.1995 Gazette 1995/06)**

(54) **PROJEKTIONSSYSTEM ZUM PROJIZIEREN EINES FARBVIDEOBILDS UND ZUGEHÖRIGE TRANSFORMATIONSOPTIK**

COLOUR VIDEO IMAGE PROJECTION SYSTEM AND ASSOCIATED TRANSFORMATION OPTICS

SYSTEME DE PROJECTION D'IMAGES VIDEO EN COULEURS ET ELEMENTS OPTIQUES DE TRANSFORMATION CORRESPONDANTS

(84) Benannte Vertragsstaaten:
**AT CH ES FR GB IT LI NL**
Benannte Erstreckungsstaaten:
**SI**

(30) Priorität: **23.07.1993 DE 4324899**

(43) Veröffentlichungstag der Anmeldung:
**12.07.1995 Patentblatt 1995/28**

(73) Patentinhaber:
• **LDT GmbH & Co. Laser-Display-Technologie KG
07552 Gera (DE)**
• **CARL ZEISS JENA GmbH
07745 Jena (DE)**

(72) Erfinder:
• **DETER, Christhard
D-07546 Gera (DE)**
• **HILLER, Klaus
D-07551 Gera (DE)**
• **ELSTER, Günther
D-89312 Günzburg (DE)**
• **RÖDER, Rolf
D-07747 Jena (DE)**
• **HOLOTA, Wolfgang
D-07745 Jena (DE)**

(74) Vertreter: **Geyer, Werner et al
Patentanwälte
Geyer, Fehners & Partner,
Perhamerstrasse 31
80687 München (DE)**

(56) Entgegenhaltungen:
**EP-A- 0 506 338        WO-A-88/01823
US-A- 4 003 080        US-A- 4 297 723**

• **PATENT ABSTRACTS OF JAPAN vol. 16, no. 189
(P-1348) 8. Mai 1992 & JP,A,04 024 685 (HITACHI)**

## Beschreibung

Die Erfindung bezieht sich auf ein Projektionssystem zum Projizieren eines aus Bildpunkten aufgebauten Videobildes auf einen Schirm mit mindestens einer ein Lichtbündel aussendenden, in ihrer Intensität veränderbaren Lichtquelle und einer Ablenkeinrichtung, die das Lichtbündel zur Beleuchtung der Bildpunkte in zwei verschiedenen Richtungen auf dem Schirm ablenkt. Weiter bezieht sich die Erfindung auch auf eine Transformationsoptik, die insbesondere zur Verwendung in einem derartigen Projektionssystem geeignet ist.

Projektionssysteme der gattungsgemäßen Art sind beispielsweise aus der WO-A-88 01823 bekannt.

Aus dem Stand der Technik sind Verfahren und Vorrichtungen bekannt, bei denen ein Videobild unmittelbar in einer entsprechenden Größe erzeugt wird. Neben der normalen Fernsehbildröhre gibt es auch Flüssigkristalldisplays, Plasmadisplays und ferromagnetische Displays. Nachteilig bei derartigen Techniken ist, daß die Bildgröße technisch begrenzt ist. So lassen sich mit der normalen TV-Bildröhre maximal Bilder mit einer Bildschirmdiagonalen von ca. 1 m herstellen, wobei bei augenblicklichen Stand der Technik die Masse der Bildröhre ca. 60 kg und die Bautiefe ca. 0,8 m beträgt. Diese Größe reicht aber z.B. für die neue Femsehnorm HDTV nicht aus, bei der eine minimale Bilddiagonale von 1,5 m gefordert wird, um den Benutzem einen Bildwinkel, wie aus dem Kino gewohnt, zu ermöglichen.

Auch bei Flüssigkeitsdisplays, Plasmadisplays oder ferromagnetischen Displays sind nur relativ kleine Bilder erreichbar, wobei das Flüssigkristalldisplay heutzutage praktisch auf maximal Postkartengröße beschränkt ist.

Dagegen gibt es auch Lösungen, bei denen das primäre TV-Bild mittelbar durch ein Projektionsverfahren vergrößert auf eine Projektionsebene übertragen wird. Zur Erzeugung des primären TV-Bildes werden LCD-Matrizen oder beim Farbfernsehen kleine, sehr lichtintensive TV-Bildröhren verwendet, wobei pro Farbe eine Röhre eingesetzt wird.

Aufgrund der erforderlichen optischen Übertragungslänge zwischen dem primären TV-Bild und dem vergrößert abgebildeten, projizierten Bild besteht zwischen der erreichbaren Bildgröße und dem Abstand Projektor-Bildwand ein fester Zusammenhang. Der Projektor muß aus Gründen begrenzter Lichtleistung und wegen des Aufwands für das optische System in einem geringen Abstand vor der Bildwand stehen. Bisher ist es daher nicht möglich, mit der verfügbaren Projektor-Leistung die Entfernung zwischen Projektor und Leinwand in einem Kino zu überbrücken.

Zusätzlich zu den erwähnten Vorrichtungen zur Projektion eines Fernsehbildes gibt es auch Vorrichtungen, die Laser als Lichtquellen zur Erzeugung eines farbigen Videobildes einsetzen (z.B. Funkschau 1970, Heft 4, Seite 96, oder EP-A-0 084 434). Dabei werden drei verschiedenfarbige Laser intensitätsmäßig mit Lichtmodulatoren moduliert und über ein Spiegelsystem zu einem gemeinsamen Lichtbündel zusammengefaßt, welches mechanisch über ein Spiegelsystem gerastert und auf einen Schirm projiziert wird.

Eine etwas andere Lösung ist in der DE-A-3 152 020 angegeben, wobei hier die verschiedenfarbigen Lichtbündel nicht zu einem gemeinsamen Lichtbündel zusammengefaßt, sondern unabhängig voneinander mit Hilfe eines Linsensystems auf einen Spiegel geworfen werden, der die Lichtstrahlen auf einem Schirm reflektiert. Der Spiegel ist in Form von kleinen Hohlspiegeln geschliffen und erfüllt neben der Umlenkung den Zweck, die einzelnen, verschiedenfarbigen Lichtbündel zusammen in einem gemeinsamen Bildpunkt auf dem Schirm zu fokussieren. Nachteilig bei diesem Projektionssystem ist vor allem der komplizierte Spiegel, der nur schwer herstellbar ist und eine sorgfältige Justierung der Lichtquellen und des Linsensystems erforderlich macht.

Bei allen genannten Systemen für die Projektion mit Lasern wird mechanisch abgelenkt. Um schnell genug ablenken zu können und auch die benötige Zeilenzahl mit den üblichen Polygonspiegeln erzeugen zu können, ist der erreichbare Ablenkwinkel der Ablenkeinrichtung recht begrenzt. Dadurch ist es nicht möglich, ein TV-Gerät geringer Bautiefe zu realisieren. Außerdem erfolgt aufgrund der Geometrie eine Bildverzerrung zum Bildrand hin, der sogenannte "Tangensfehler", der seine Ursache in einer zeitlich gleichmäßigen Wnkelablenkung durch den Polygonspiegel hat, die sich in Form einer ungleichmäßigen Rasterung auf dem Bildschirm auswirkt.

Im Prinzip könnte man zur Verringerung der Bildfehler nur über einen kleinen Ablenkbereich ablenken und das Bild über ein Glasfaserbündel aufweiten. Aufgrund der hohen Punktdichte bei Videobildern ist die Fertigung solcher Glasfasern aber problembehaftet und es ist sehr zweifelhaft, ob eine derartige Optik auch wirklich für einen kommerziellen Einsatz kostengünstig genug hergestellt werden könnte.

In der Drucktechnik (vgl. z.B. "Der Laser in der Druckindustrie" von Werner Hülsbusch, Verlag Hülsbusch, 1990, Seiten 252, 257, 261, 431, 443, 473, 485) sind verschiedene Möglichkeiten bekannt, einen dort auftretenden Tangensfehler mit Hilfe einer sogenannten linearisierenden $f(\Theta)$-Optik zu kompensieren. Die in der Literatur beschriebenen Optiken lassen sich jedoch für eine Videoprojektion nicht ohne weiteres einsetzen, da sie zwei wesentliche Nachteile aufweisen:

1. Die aus der Druckindustrie stammenden Lösungen arbeiten jeweils nur mit einer monochromatischen Lichtquelle, weshalb auch auf Farbfehler keine Rücksicht genommen werden muß. Bei einem Videoprojektionssystem für Farbbilder ist jedoch außer der Korrektur geometrisch-optischer Fehler und der durch die Ablenkeinrichtung erzeugte Bildfeldkrümmung auch noch eine Korrektur der Farbfehler erforderlich.

2. Die angegebenen optischen Systeme sind vorwiegend dazu ausgelegt, geometrische Bildfehler aufgrund der mechanischen Ablenkung auszugleichen; eine Ablenkwinkelvergrößerung kann mit ihnen jedoch nicht erreicht werden.

Damit ergeben sich auch bei diesen bekannten Optiken für die Erzeugung großer Bildfelder recht große Bautiefen, wie sie aber auf dem Gebiet der TV-Technik höchst unerwünscht und nicht realisierbar sind.

Diese im wesentlichen in der Drucktechnik eingesetzten optischen Systeme können somit lediglich systembedingte Fehler der Ablenkeinrichtung bei Anwendung monochromatischer Laser kompensieren. Einen Einfluß auf die Bildgröße im Zusammenhang mit dem gegebenen Ablenkwinkel haben sie aber nicht, so daß die erforderliche optische Übertragungslänge nicht beeinflußt werden kann.

Weiter sind aus der EP-A-0 360 233, der DE-A-4 227 595, JP-A-3 88 586 ein- oder mehrstufige $f(\theta)$-Linsen bekannt, die aber die gleichen Nachteile aufweisen, wie oben bezüglich der Laseranwendung beim Drucken dargestellt wurde.

Ausgehend von dem geschilderten Stand der Technik liegt der Erfindung die Aufgabe zugrunde, ein Projektionssystem für Videobilder zur Verfügung zu stellen, mit dem ein erheblich größeres Bild bei gleichzeitig besonders geringer Bautiefe erreichbar ist. Ferner soll eine zum Einsatz bei einem solchen Projektionssystem geeignete Transformationsoptik angegeben werden.

Diese Aufgabe wird erfindungsgemäß bei einem gattungsgemäßen Projektionssystem dadurch gelöst, daß eine mindestens zweistufige Transformationsoptik zur Vergrößerung des Videobildes bei Verringerung der Bautiefe zwischen Ablenkeinrichtung und Schirm angeordnet ist, die nach der Tangensbedingung $\tan \theta' = K \tan \theta$, mit $\theta$ dem Winkel des in die Transformationsoptik einlaufenden und $\theta'$ dem Winkel des aus der Transformationsoptik auslaufenden Lichtbündels und $K > 1$, verzeichnungsfrei korrigiert ist.

Beim erfindungsgemäßen Projektionssystem läßt sich durch den Einsatz der mindestens zweistufigen Transformationsoptik eine erhebliche Vergrößerung des Ablenkwinkels erreichen, wobei gleichzeitig die Bautiefe relativ gering bleibt und zudem mittels der verschiedenen optischen Stufen auch noch unterschiedliche Abbildungsfehler kompensierbar sind. So kann z.B. durch eine Stufe der Transformationsoptik eine Vergrößerung des Ablenkwinkels erfolgen, während zusätzlich zu den Abbildungsfehlern durch die zweite Stufe in vorteilhafter Weise auch ggf. noch Farbfehler kompensiert werden können.

Durch die Erfindung läßt sich somit eine besonders große Ablenkung (und damit Bildgröße) des Videobildes erreichen, wodurch die benötigte Bautiefe deutlich verringert wird. Es hat sich gezeigt, daß auch Farbfehler der Transformationsoptik bei nur zwei optischen Stufen ausreichend gut kompensiert werden können, so daß die Erfindung auch für die Projektion von Farbfernsehbildem einsetzbar ist. So ließ sich bei einem praktischen Ausführungsbeispiel ein erfindungsgemäßes Projektionssystem für farbige Videobilder mit nur 60 cm Bautiefe bei einer Bildschirmdiagonale von 2 m verwirklichen.

Gemäß einer bevorzugten Weiterbildung des erfindungsgemäßen Projektionssystems ist im gemeinsamen Strahlengang zwischen Transformationsoptik und Schirm eine Feldlinse angeordnet, wodurch alle, so auch die am Rand des Schirmes auftretenden Lichtbündel, in Richtung des Beobachters parallelisiert werden, so daß für den Betrachter auf dem Schirm ein Bild besonders gleichmäßiger Helligkeit entsteht.

Gemäß einer weiteren vorteilhaften Ausbildung der Erfindung ist die Feldlinse eine Fresnellinse. Fresnellinsen lassen sich sehr flach bauen und sind einfach, beispielsweise mit Hilfe von Kunststoffolien, zu verwirklichen, so daß das erfindungsgemäße Projektionssystem besonders flach gebaut werden kann und das Gewicht des Gesamtsystems gegenüber der Verwendung anderer Feldlinsen noch herabgesetzt wird, wobei durch die Fresnellinse die Kosten nur unwesentlich erhöht werden.

Bei einer anderen bevorzugten Weiterbildung der Erfindung ist die Fresnellinse so angeordnet, daß das durch die Transformationsoptik erzeugte Bild der Ablenkeinrichtung im Brennpunkt der Fresnellinse oder in einem Abstand von $\pm 20\%$ des Wertes der Brennweite der Fresnellinse von deren Brennpunkt entfernt liegt. Dadurch ist in vorteilhafter Weise sichergestellt, daß die aus der Transformationsoptik in verschiedene Richtung austretenden Lichtbündel senkrecht auf den Schirm auftreffen, wodurch eine besonders gleichmäßige Ausleuchtung des Schirms auf einfache Art erzielt wird.

Fresnellinsen sind in verschiedenen Ausführungen, je nach erforderlicher optischer Qualität, verfügbar, wobei für viele Zwecke Fresnellinsen ausreichen, deren Zonenstruktur sich nur auf einer Fläche befindet, während die gegenüberliegende Fläche plan ist. Gemäß einer vorzugsweisen Weiterbildung der Erfindung wird eine derartige Fresnellinse so angeordnet, daß ihre plane Fläche der Transformationsoptik zugewandt ist. Dies wirkt sich vor allen Dingen günstig auf den flachen Aufbau des Projektionssystems aus, da dann die Fresnellinse besonders nahe am Schirm angeordnet sein oder gar an diesem anliegen kann.

Eine andere vorzugsweise Ausgestaltung der Erfindung besteht darin, daß bei Vorhandensein einer der Transformationsoptik zugeordneten objektseitigen Hauptebene des Systems die Ablenkeinrichtung zwischen dieser objektseitigen Hauptebene und einem ersten objektseitigen Linsenscheitel der Transformationsoptik angeordnet ist. Mit Hilfe dieser Maßnahme lassen sich besonders große Ablenkwinkel erzielen, ohne daß große Bildfehler berücksichtigt werden müssen. Von Vorteil ist hierbei auch, daß bei einer derartigen Anordnung ein austretendes Lichtbündel erzeugt wird, das sogar besser fokussiert ist als das in die Transformationsoptik einfallende Lichtbündel, z. B. eines Laserstrahls.

Die Erfindung bezieht sich ferner auf eine spezielle Transformationsoptik, die insbesondere beim erfindungsgemäßen Projektionssystem einsetzbar ist. Diese Transformationsoptik zur Verwendung in einem Projektionssystem zum Projizieren eines aus Bildpunkten aufgebauten Videobildes auf einen Schirm mit mindestens einer ein Lichtbündel aussendenden, in ihrer Intensität veränderbaren Lichtquelle und einer Ablenkeinrichtung, die das Lichtbündel zur Beleuchtung der Bildpunkte in zwei verschiedenen Richtungen auf dem Schirm ablenkt, umfaßt mindestens zwei optische Stufen. Dabei erzeugt die erste optische Stufe eine Zwischenbildebene, die durch die nachfolgenden optischen Stufen auf den Schirm abgebildet wird. Die Transformationsoptik ist nach der Tangensbedingung $\tan \theta' = K \tan \theta$, mit $\theta$ dem Winkel des in die Transformationsoptik einlaufenden und $\theta'$ dem Winkel des aus der Transformationsoptik auslaufenden Lichtbündels und $K > 1$, verzeichnungsfrei korrigiert.

Mit Hilfe der erfindungsgemäßen Transformationsoptik läßt sich eine sehr starke Vergrößerung des Ablenkwinkels der Ablenkeinrichtung erreichen. Zudem werden die von einer derartigen Transformationsoptik ausgehenden Lichtbündel auch noch enger fokussiert als die in die Transformationsoptik einfallenden Lichtbündel.

Die erfindungsgemäße Transformationsoptik kann so ausgebildet werden, daß die mindestens zwei optischen Stufen jeweils eine positive Brechkraft aufweisen, aber auch so, daß sie mindestens eine optische Stufe mit negativer Brechkraft enthält. In letzterem Fall ist aber zu beachten, daß dabei die Zwischenbildebene auch virtuell sein kann.

Gemäß einer vorteilhaften Weiterbildung der Erfindung enthält die Zwischenbildebene bei parallelem Lichteinfall einen bildseitigen Brennpunkt der ersten optischen Stufe. Das heißt, daß sich die Zwischenbildebene möglichst in der Brennebene der ersten optischen Stufe befinden sollte. Dadurch wird erreicht, daß bei parallel eintretenden Lichtbündeln, unabhängig vom Ort, an dem das Lichtbündel objektseitig die optische Achse der ersten Stufe schneidet, auf der Zwischenbildebene immer ein scharfer Punkt abgebildet wird, mit der Folge, daß dann die Abbildung durch die nachfolgenden optischen Stufen von der Zwischenbildebene auf den Schirm gleichfalls scharf erfolgen wird. Gleichzeitig wird dabei erreicht, daß die scharte Abbildung auf der Zwischenbildebene und damit nachfolgend auch auf den Schirm selbst dann gewährleistet ist, wenn die Ablenkung eines eingangsseitigen Lichtbündels zur Erzeugung eines Videobildes nicht nur an einem Punkt der optischen Achse stattfindet, sondern an mehreren. Das ist beispielsweise dann der Fall, wenn die Ablenkung mechanisch durch Spiegel erfolgt, die für eine Ablenkung in Zeilenrichtung und Bildrichtung eines Videobildes räumlich getrennt sind, weshalb die erfindungsgemäße Transformationsoptik besonders auch für derartige Ablenksysteme geeignet ist. Das gilt besonders dann wenn objektseitig ein nahezu paralleles Lichtbündel erzeugt wird, wie dies beispielsweise bei einem Laservideosystem der Fall ist.

In anderer vorteilhafter Weiterbildung der Erfindung weist die zweite optische Stufe eine Brennweite auf, die kleiner als die Hälfte der Brennweite der ersten optischen Stufe ist, wodurch sich eine große Verringerung der Bautiefe der gesamten Projektionsoptik im Vergleich zur Größe des Bildes auf dem Schirm erreichen läßt.

Besonders bevorzugt wird die Brennweite der zweiten Stufe sogar kleiner als 1/5 der Brennweite der ersten Stufe gewählt.

Bei Optiken und optische Stufen werden zur Vereinfachung optischer Rechnungen im allgemeinen Hauptebenen und Brennpunkte, sowohl objektseitig als auch bildseitig, zugeordnet. Gemäß einer vorzugsweisen Weiterbildung der Erfindung liegt die objektseitige Hauptebene der Transformationsoptik außerhalb eines ersten Linsenscheitels und der objektseitige Brennpunkt der ersten optischen Stufe zwischen der objektseitigen Hauptebene und dem ersten Linsenscheitel. Hierdurch wird erreicht, daß der Brennpunkt frei zugänglich ist, so daß dort beispielsweise die Ablenkeinrichtung eines Projektionssystems angeordnet werden kann. Die Anordnung einer Ablenkeinrichtung in der Nähe des Brennpunkts wirkt sich besonders günstig auf die Fokussierung auf die Zwischenbildebene und damit auch, wegen der nachfolgenden Stufen für die Qualität der Abbildung auf den Schirm aus. Dadurch, daß der objektseitige Brennpunkt zwischen objektseitiger Hauptebene der ersten optischen Stufe und dem erstem Linsenscheitel angeordnet ist, lassen sich geometrisch-optische Bildfehler und Farbfehler besonders vorteilhaft kompensieren.

Gemäß einer anderen vorzugsweisen Weiterbildung der Erfindung bestehen die erste optische Stufe und die zweite optische Stufen aus mehrlinsigen Anordnungen, wodurch unterschiedliche Abbildungsfehler besonders gut kompensiert werden können. Mehrlinsige Anordnungen schaffen aber auch mehr Freiheitsgrade für die Wahl der Lage von Hauptebenen.

Eine weitere vorteilhafte Weiterbildung der erfindungsgemäßen Transformationsoptik, die eine oder mehrere verschiedene Zwischenbildebenen zwischen den einzelnen optischen Stufen aufweist, besteht darin, daß jede Zwischenbildebene zwischen einem letzten Linsenscheitel einer optischen Stufe und einem ersten Linsenscheitel der nachfolgenden optischen Stufe liegt, wodurch erreicht wird, daß die Zwischenbildebenen jeweils außerhalb des Linsenmaterial liegen. Damit wird erreicht, daß sich Störungen im Linsenmaterial, wie z.B. Inhomogenitäten, sich nur besonders gering auf die Schärfe des projizierten Bildes auswirken.

Die Erfindung wird nachfolgend anhand der Zeichnungen im Prinzip noch näher erläutert. Es zeigen:

Fig. 1 eine Prinzipdarstellung eines Ausführungsbeispiels für ein erfindungsgemäßes Projektionssystem;

Fig. 2 die Prinzipdarstellung einer zweistufigen Transformationsoptik;

Fig. 3 die Prinzipdarstellung einer zweistufigen Transformationsoptik mit virtueller Zwischenbildebene;

Fig. 4 ein Ausführungsbeispiel für eine erfindungsgemäße Transformationsoptik (Darstellung anhand des Verlaufes von zwei Strahlenbündeln);

Fig. 5 die erfindungsgemäße Transformationsoptik aus Fig. 4 zur näheren Erläuterung des Aufbaus eines Linsensystems im Detail, und

Fig. 6 eine bauliche Ausführungsform für ein erfindungsgemäßes Projektionssystem.

In den in den Figuren dargestellten Ausführungsbeispielen werden Systeme für Farbbild-Projektion gezeigt, obgleich die Erfindung gleichermaßen auch für einfarbige Bildprojektionen einsetzbar ist.

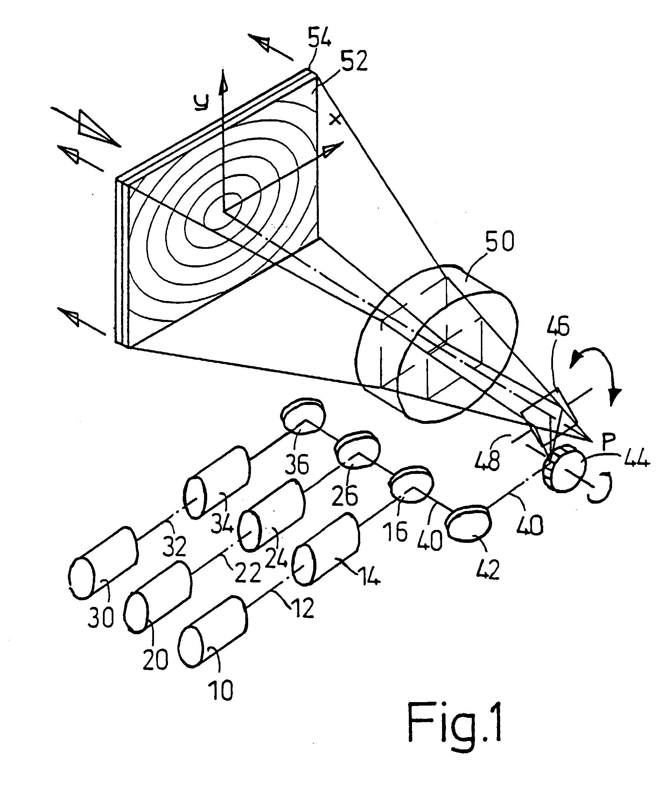

Bei dem in Fig. 1 schematisch dargestellten Projektionssystem für ein farbiges Fernsehbild wird die Farbe jedes Bildpunktes durch drei verschiedene Farbvalenzen gebildet, die in Abhängigkeit vom gewünschten Farbton und der gewünschten Helligkeit durch entsprechende Farbsignale erzeugt werden.

Bei dem Projektionssystem aus Fig. 1 werden zur Steuerung von Farbton und Helligkeit drei Lichtquellen 10, 20, 30 eingesetzt, die im wesentlichen parallele Lichtbündel 12, 22, 32 erzeugen. Hierfür eignen sich insbesondere Laser. Es ist jedoch auch denkbar, andere Lichtquellen einzusetzen, z.B. LEDs, bei denen die Lichtbündel mit Hilfe einer Optik parallelisiert werden. Die Optik kann dabei beispielsweise jeweils aus einem optischen System bestehen, in dessen Brennpunkt das jeweilige LED angeordnet ist, wobei auch Blenden zur Strahlbegrenzung vorgesehen sein können. Zur Steuerung der Intensität der Lichtquellen werden die Spannungen an den LEDs verändert. Als besonders vorteilhaft stellen sich dabei möglichst punktförmige LEDs dar.

Im Beispiel von Fig. 1 sind für die Lichtquellen 10, 20, 30 Edelgaslaser vorgesehen. Da deren Intensität für ein Videobild nicht schnell genug geschaltet werden kann, werden die Lichtquellen 10, 20, 30 mit konstanter Lichtleistung betrieben und die Änderung der Lichtintensität erfolgt durch zusätzliche Modulatoren 14, 24, 34, für die sich insbesondere DKDP-Kristalle eignen, wie dies aus dem Stand der Technik bekannt ist.

Die einzelnen Lichtbündel 12, 22, 32 werden weiter durch dichroitische Spiegel 16, 26, 36 zu einem gemeinsamen Lichtbündel 40 zusammengeführt, welches innerhalb des Farbprojektionssystems alle Lichtbündel vereint und in einem einzigen Strahlengang durch das Projektionssystem hindurchläuft.

Zur Bilderzeugung wird eine Ablenkeinrichtung eingesetzt, über welche die einzelnen Bildpunkte des Videofernsehbilds sequentiell aufgebaut werden können. Man könnte nun das gemeinsame Lichtbündel 40 allein durch die Ablenkeinrichtung direkt auf einen Schirm 54 ablenken. Um aber eine besondere Kompaktheit des gesamten Fernsehprojektionssystems zu erreichen und den zur Verfügung stehenden Platz vorteilhaft auszunützen, ist es auch möglich, verschiedene Einheiten des Projektionssystems an optisch nicht geradlinig miteinander verbindbaren Orten anzubringen, wobei dann das gemeinsame Strahlenbündel 40 umgelenkt werden muß.

Eine solche Umlenkung wird beispielhaft in Fig. 1 mit Hilfe eines Spiegels 42 durchgeführt, mit dem das Lichtbündel 40 auf die Ablenkeinrichtung gelenkt wird.

Die Ablenkeinrichtung im Ausführungsbeispiel von Fig. 1 besteht aus einem Polygonspiegel 44 und einem Schwenkspiegel 46. Der Polygonspiegel 44 wird kontinuierlich gedreht, und das Lichtbündel wird durch die Folge der Polygonflächen zeilenmäßig abgelenkt. Diese Ablenkrichtung durch den Polygonspiegel 44 wird im folgenden als X-Richtung bezeichnet. Der Schwenkspiegel 46 wird um eine Achse 48 hin- und hergeschwenkt und dient zur bildmäßigen Rasterung, wobei seine Ablenkrichtung im folgenden als Y-Richtung bezeichnet wird. Zur Schwenkung und Synchronisation ist eine nach dem Stand der Technik bekannte Elektronik vorgesehen.

Das in X- und Y-Richtung gerasterte gemeinsame Lichtbündel 40 wird nach der Ablenkung durch eine Transformationsoptik 50 geführt, deren Wirkungsweise weiter unten dargestellt ist. Zum Verständnis des Ausführungsbeispiels von Fig. 1 ist hier nur wichtig, daß durch die Transformationsoptik 50 der Ablenkwinkel und damit das projizierte Fernsehbild vergrößert wird. Dabei wird durch die Transformationsoptik, bei der der Ort der Ablenkeinrichtung eine Eintrittspupille in üblicher optischer Nomenklatur ist, in eine der Eintrittspupille durch die Transformationsoptik zugeordnete Austrittspupille abgebildet.

Nach Verlassen der Transformationsoptik 50 wird das gemeinsame Lichtbündel 40 auf eine Fresnellinse 52 und danach auf einen Bildschirm 54 geworfen, auf dem es von einem Betrachter in Richtung der Pfeile als Bildpunkt des Videobildes sichtbar wird.

Prinzipiell könnte man das Fernsehbild direkt auf einen Schirm 54 werfen, der, wenn er als Mattscheibe ausgebildet ist, Licht in alle möglichen Richtungen streuen würde. Aber auch bei einer Mattscheibe hängt die Lichtintensität in Beobachtungsrichtung stark vom Winkel des auftreffenden Lichtbündels ab, so daß bei besonders großen Fernsehbildern an den Bildrändern eine geringere Intensität als im Zentrum entstehen würde. Die unterschiedliche Intensität könnte man zwar auch durch Änderung der Lichtintensität an den Lichtquellen 10, 20, 30 gleichmäßig aussteuern, jedoch gibt es auch einen wesentlich vorteilhafteren Weg: Eine Feldlinse, wie sie hier durch die Fresnellinse 52 verwirklicht ist, parallelisiert nämlich das aus der Transformationsoptik 50 unter verschiedenen Winkeln austretende Licht in Richtung zum Beobachter. Gemäß den Gesetzen der Linsenoptik wird das Licht dann am besten in Richtung der Pfeile parallelisiert, wenn der Brennpunkt der Fresnellinse 52 in der Austrittspupille der Transformationsoptik 50 liegt.

Bei einem Ausführungsbeispiel gemäß Fig. 1 hat sich gezeigt, daß gute Abbildungseigenschaften noch dann vorhanden sind, wenn die Austrittspupille der Transformationsoptik noch in einem Abstand von ± 20% der Brennweite der Fresnellinse 52 von deren Brennpunkt entfernt liegt.

Eine Fresnellinse weist üblicherweise auf einer Fläche eine Zonenstruktur auf, die die Abbildungseigenschaften einer dickeren Linse zonenweise nachbildet. Zur Verbesserung der Qualität einer Fresnellinse kann man auch auf der dieser Fläche gegenüberliegenden Fläche ebenfalls eine Zonenstruktur aufbringen. Es hat sich aber gezeigt, daß für das Ausführungsbeispiel gemäß Fig. 1 eine Fresnellinse 52 völlig ausreicht, die nur auf einer Fläche eine Zonenstruktur hat, während die gegenüberliegende Fläche plan ausgeführt ist. Die Zonenstruktur der Fresnellinse 52 ist dabei dem Schirm 54 zugewandt und die plane Fläche zeigt in Richtung der Transformationsoptik 50, wodurch sich eine besonders flachere Bauweise ergibt.

Bei dem Ausführungsbeispiel nach Fig. 1 wird die Ablenkung elektromechanisch durch den Polygonspiegel 44 und den Schwenkspiegel 46 bewirkt, was zunächst allerdings zu zwei negativen Eigenschaften führt:

Erstens findet die Ablenkung des Lichtbündels 40 durch den Polygonspiegel 44 in X-Richtung an einem anderen Punkt statt als die bildmäßige Ablenkung in Y-Richtung über den Schwenkspiegel 46. Der Drehpunkt für die Ablenkung in X-Richtung liegt nämlich auf dem Polygonspiegel 44. Berücksichtigt man die Ablenkung des Schwenkspiegels 46, liegt der virtuelle Punkt für die Abbildung durch die Transformationsoptik 50 mit der nachfolgenden Fresnellinse 52 in dem in Fig. 1 eingezeichneten Punkt P. Die Ablenkung in Y-Richtung erfolgt dagegen durch Verschwenken des Schwenkspiegels 46 um die Achse 48, so daß also bei dem System nicht nur ein einziger Punkt für die Ablenkung für das Fernsehbild vorliegt. Dies ist im allgemeinen nicht kritisch, wenn der Abstand von Punkt P zur Achse 48 sehr klein gegenüber dem Abstand des Punktes P vom Schirm 54 ist, also wenn die Projektion ohne Transformationsoptik erfolgt. Die Ablenkung in unterschiedlichen Punkten ist jedoch bei der Auslegung einer Transformationsoptik 50 zu beachten, da dann unterschiedliche Eintrittspupillen für die X- und Y-Ablenkung vorliegen. Die Transformationsoptik 50 muß deswegen so ausgelegt werden, daß die Abbildung bezüglich der Lage der Eintrittspupille vernachlässigbar ist.

Die zweite bei einem derartigen Fernsehprojektionssystem zu beachtende Eigenschaft ist die Nichtlinearität in der Abbildung eines gedrehten Spiegels. Durch einen gedrehten oder bewegten Spiegel, der sich mit konstanter Winkelgeschwindigkeit dreht, ist die Ablenkung X auf dem Schirm 54 nicht konstant, da X mit einem Ablenkwinkel $\Theta$ zur optischen Achse des Systems über die Beziehung

$$X = L \cdot \tan\Theta$$

zusammenhängt, wobei L der Abstand vom Ablenkpunkt P zum Schirm 54 bezeichnet.

Bei den nachfolgenden Ausführungen soll vorerst die Wirkung der Transformationsoptik 50 außer acht gelassen werden.

Für kleine Winkel $\Theta$ verläuft der $\tan\Theta$ näherungsweise linear. Die Änderung der Ablenkung x ist aber:

$$\mid \Delta x \mid = L \cdot \Delta\Theta / \cos^2\Theta.$$

Hieraus ergibt sich, daß bei $\Theta = 0°$ die Änderung $\Delta x$ nur halb so groß ist wie bei $\Theta = 45°$.

Dieses einfache Zahlenbeispiel macht die Größe des zu erwartenden Effekts deutlich. Abhilfe könnte man schaffen, indem man den Abstand L zwischen dem Ablenkbereich und dem Schirm 54 bei gleichbleibender Bildgröße sehr groß wählt, damit die Ablenkwinkel $\Theta$ sehr klein sind, also im näherungsweise linearen Bereich bleiben, jedoch sind dem für eine praktische Ausführung Grenzen gesetzt, damit ein erfindungsgemäßes Projektionssystem innerhalb eines akzeptablen Raumbereichs bleibt und beispielsweise in Wohnungen verwendbar ist.

Um dieses Problem in den Griff zu bekommen wird eine Transformationsoptik 50 eingeführt, die den beschriebenen Bildfehler weitgehend kompensiert.

Bei dem Projektionssystem von Fig. 1 entspricht der Ablenkwinkel $\Theta$ dem Einfallswinkel in die Eintrittspupille der Transformationsoptik, so daß auch der Einfallswinkel im folgenden mit $\Theta$ bezeichnet wird.

Es sind optische Systeme bekannt, die einen eingangsseitigen Einfallwinkel $\Theta$ eines Lichtbündels ausgangsseitig in einen Winkel $\Theta'$ transformieren, wobei $\Theta'$ den Ausfallwinkel des aus der Austrittspupille austretenden Lichtbündels zur optischen Achse bezeichnet. Für eine verzeichnungsfreie Abbildung eines Objektes muß die Beziehung

$$\tan\Theta' = K \cdot \tan\Theta$$

erfüllt sein, worin K eine Konstante des Linsensystems ist. Diese Beziehung heißt "Tangensbedingung".

Bei Zwischenschaltung einer Transformationsoptik 50, welche die Tangensbedingung erfüllt, besteht für die Ablenkung X des Strahlenbündels 40 zwischen Ablenkeinrichtung und Bildschirm 54 die Beziehung:

$$X = L \cdot \tan \Theta'.$$

Durch Einsetzen der Tangensbedingung erhält man:

$$X = L \cdot K \cdot \tan \Theta.$$

Hieraus wird erkennbar, daß für eine vorgegebene maximale Ablenkung X der Ablenkbereich (Winkel $\Theta$) verkleinert werden kann, wenn K >> 1 ist. Es verringert sich dadurch der gegebene Tangensfehler, da bei $\Theta \rightarrow 0$ der Tangens des Winkels $\Theta$ näherungsweise gleich dem Winkel $\Theta$ gesetzt werden kann.

Aus der Betrachtung wird aber auch deutlich, daß eine Verzerrung durch den Tangensfehler nur verschwindet, wenn der Wert von K gegen unendlich geht. Deshalb sollte bei einer Transformationsoptik 50, wenn sie der Tangensbedingung genügt, ein relativ großer Wert für K, der mindestens 2 oder größer ist, gewählt werden. Günstiger ist allerdings ein wesentlich größerer Faktor K. Bei dem Ausführungsbeispiel gemäß Fig. 1 wurde ein Wert für K von ungefähr 5 für die Transformationsoptik 50 verwendet.

Um Bildfehler gering zu halten, wird die Transformationsoptik 50 nach der oben angegebenen Tangensbedingung verzeichnungsfrei korrigiert. Die Auslegung eines solchen optischen Systems erfolgt im allgemeinen in einer dem Fachmann geläufigen Art und Weise mit Hilfe von Rechnerprogrammen.

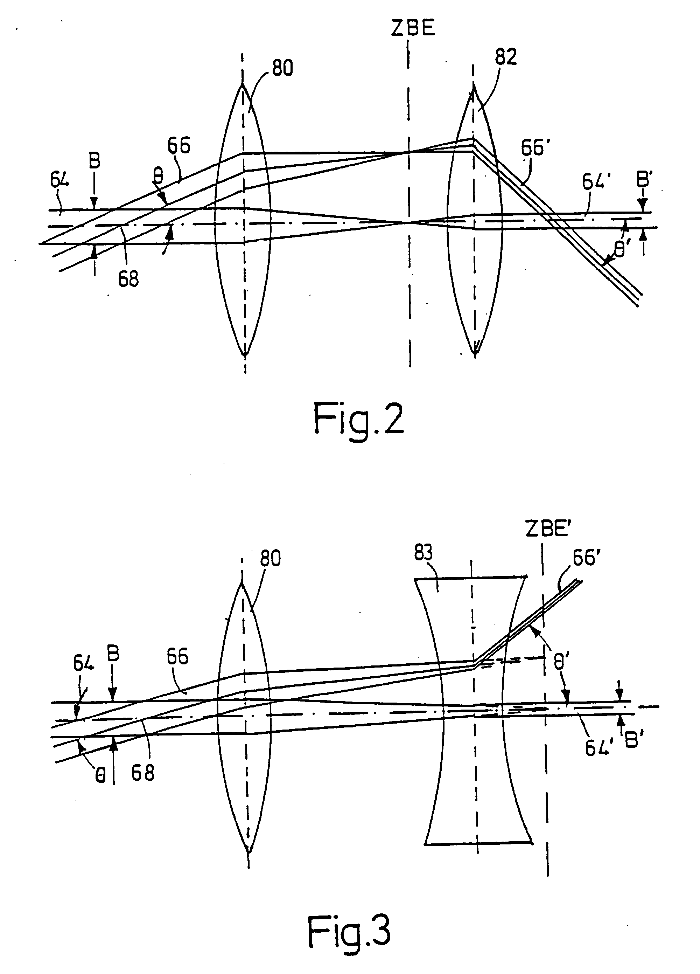

In Fig. 2 ist ein aus zwei bikonvexen Linsen 80 und 82 bestehendes Linsensystem gezeigt, welches das Abbildungsprinzip für die Verwirklichung einer nach der Tangensbedingung verzerrungsfrei korrigierten Transformationsoptik 50 darstellt. Zur Veranschaulichung des Prinzips ist die Eintrittspupille 68 in den objektseitigen Brennpunkt gelegt. Die beiden Bikonvexlinsen 80 und 82 haben einen Abstand zueinander, bei dem der objektseitige Brennpunkt der Bikonvexlinse 82 mit dem bildseitigen Brennpunkt der Bikonvexlinse 80 zusammenfällt. Ein entlang der optischen Achse verlaufendes Lichtbündel 64 wird in den bildseitigen Brennpunkt der Linse 80 fokussiert und verläßt, da dieser mit dem bildseitigen Brennpunkt der anderen Bikonvexlinse 82 zusammenfällt, letztere wieder als paralleler Strahl 64'. Ist die Brennweite der zweiten Bikonvexlinse 82 kleiner als die der Bikonvexlinse 80, wird die Strahlbreite B' des ausfallenden Lichtbündels 64' enger bzw. kleiner als die Strahlbreite B des einfallenden Lichtbündels 64, und zwar um einen Faktor $F_2/F_1$, wobei $F_1$ die Brennweite der ersten Bikonvexlinse 80 und $F_2$ die der zweiten Bikonvexlinse 82 bezeichnet.

Ähnliche Bedingungen gelten für ein unter einem Winkel $\Theta$ einfallendes Strahlenbündel 66, das auch in der Brennebene fokussiert wird und die zweite Bikonvexlinse 82 gleichfalls als paralleles Strahlenbündel 66' wieder verläßt. Man kann aus Fig. 2 leicht ersehen, daß auch die Konstante für die Tangensbedingung bei diesem Beispiel durch das Verhältnis der Brennweiten gegeben ist:

$$K = F_1/F_2.$$

Bei dem dargestellten Linsensystem wird ein Lichtbündel, das in die Eintrittspupille 68 einfällt, auf einer Zwischenbildebene ZBE fokussiert, wobei der Winkel $\Theta$ des Lichtbündels, mathematisch betrachtet, aufgrund der ersten Bikonvexlinse 80 in einen Abstand (von der optischen Achse) auf der Zwischenbildebene ZBE transformiert wird. Durch die zweite Bikonvexlinse 82 wird der Abstand wieder in einen Winkel $\Theta'$ zurücktransformiert.

In Fig. 2 werden die prinzipiellen physikalischen Gegebenheiten bei einer zweistufigen Abbildung dargestellt. Hieraus sind noch keine Aussagen über mono- und polychromatische Bildfehler zu gewinnen. Insbesondere sind aber, wenn die Bikonvexlinsen 80 und 82 durch zwei optische mehrlinsige Stufen ersetzt werden, Bildfehler in der üblichen Weise ausgleichbar. Bei der Auslegung einer Transformationsoptik gemäß Fig. 1 hat sich gezeigt, daß dieses Abbildungsprinzip gut geeignet ist, mono- und polychromatische Abbildungsfehler zu kompensieren.

In Fig. 3 ist ein anderes Ausführungsbeispiel gezeigt, das aber ein ähnliches Verhalten wie das System aus Fig. 2 zeigt. Die Bikonvexlinse 82 ist hier gegenüber Fig. 2 durch eine Bikonkavlinse 83 ersetzt, deren bildseitiger Brennpunkt mit dem bildseitigen Brennpunkt der Bikonvexlinse 80 zusammenfällt. Es ergeben sich dann ähnliche Verhältnisse wie bei Fig. 2, wobei aber die Zwischenbildebene ZBE außerhalb der beiden Linsen 80, 83 liegt und nur ein virtuelles Bild auf der Zwischenbildebene vorhanden ist. Wie an dem Strahlenverlauf 66, 66' zu erkennen ist, wird auch der Austrittswinkel eines Lichtbündels bezüglich der optischen Achse gegenüber dem Eintrittswinkel vergrößert. Wenn in diesem vereinfachten Beispiel die Linsen 80, 83 ebenfalls durch optische Stufen ersetzt werden, lassen sich mono- oder polychromatische Abbildungsfehler innerhalb der einzelnen Stufen oder integral über die gesamte Optik kompensieren.

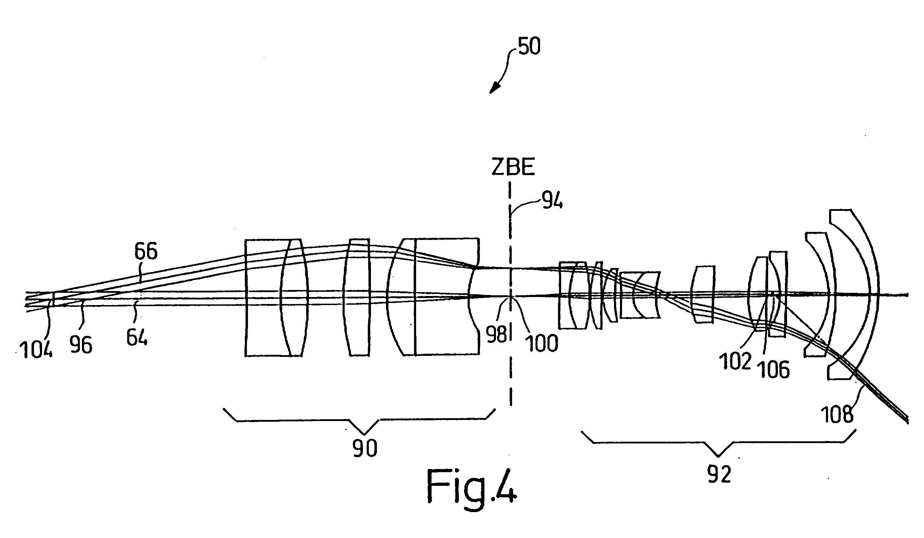

In Fig. 4 ist ein Linsensystem mit einer Eintrittspupille 104 und einer Austrittspupille 106 gezeigt, das nach den in Verbindung mit Fig. 2 diskutierten Prinzipien arbeitet. Es besteht aus zwei optischen Stufen 90 und 92 mit einer Zwischenbildebene 94. Dabei weist die erste optische Stufe 90 einen objektseitigen Brennpunkt 96 und einen bildseitigen Brennpunkt 98 und die zweite optische Stufe 92 einen objektseitigen Brennpunkt 100 und einen bildseitigen Brennpunkt 102 auf (Fig. 4). Im dargestellten Ausführungsbeispiel hat die erste optische Stufe 90 eine Brennweite von 42,88 mm und die zweite optische Stufe 92 eine Brennweite von 8,42 mm.

Die Eintrittspupille 104 liegt dabei in einem Abstand von 5mm vom objektseitigen Brennpunkt 96 der ersten optischen Stufe 90 entfernt. Dadurch werden im wesentlichen die Verhältnisse des Beispiels von Fig. 2 nachgebildet. Die Zwischenbildebene 94 liegt im bildseitigen Brennpunkt 98 der ersten optischen Stufe 90: Ihr Abstand vom objektseitigen Brennpunkt 100 der zweiten optischen Stufe 92 beträgt nur 0,08 mm. Auch die Austrittspupille 106 liegt in der Nähe des bildseitigen Brennpunkts 102 der zweiten optischen Stufe 92.

In Fig. 4 ist auch der Verlauf zweier Strahlenbündel 64 und 66 durch das zweistufige System dargestellt. Wie bereits in Fig. 2 gezeigt, werden die Strahlenbündel 64, 66 auf eine Zwischenbildebene 94 mit Hilfe der ersten optischen Stufe 90 fokussiert, wobei in Abhängigkeit vom Einfallswinkel des Strahlenbündels 66 ein entsprechender Bildpunkt für das ablaufende Strahlenbündel auf der Zwischenbildebene 94 erzeugt wird. Dieser auf der Zwischenbildebene 94 fokussierte Bildpunkt wird anschließend durch die zweite optische Stufe 92 auf die Projektionsebene transformiert, wobei der Ausfallswinkel größer als der Einfallswinkel ist.

Die Zwischenbildebene ZBE 94 liegt in diesem Beispiel zwischen den Linsenscheiteln der ersten optischen Stufe 90 und der zweiten optischen Stufe 92. Wären die beiden optischen Stufen 90 und 92 so ausgeführt, daß die bildseitige Brennweite der ersten optischen Stufe 90 innerhalb des Körpers (Materials) einer Linse einer der beiden Stufen läge, wäre es möglich, daß Inhomogenitäten im Linsenmaterial oder Staub auf der Linsenoberfläche eine scharfe Abbildung auf der Zwischenbildebene ZBE nicht zulassen würden. Dadurch, daß die Zwischenbildebene ZBE jedoch im Luftraum zwischen den beiden optischen Stufen 90 und 92 angeordnet, werden solche fehlerhaften Abbildungen, die sich über die zweite Stufe 92 auch auf die Abbildung auf den Schirm 54 (Fig. 1) übertragen würden, vermieden.

Man erkennt in Fig. 4 auch, wie am Beispiel der Fig. 2 schon diskutiert, daß das auslaufende, näherungsweise parallele Strahlenbündel 108 eine wesentlich kleinere Strahlbreite als der einfallende Strahl 66 aufweist, also enger als dieser ist. Da die Brennweite der ersten Stufe 42,88 mm und die der zweiten Stufe 8,42 mm beträgt, somit der Wert der Konstanten K in der Tangensbedingung größer als 5 wird, läßt sich mit dieser Transformationsoptik für gleiche Winkel $\Theta$ der Abstand zum Schirm ungefähr um den Faktor 5 verkleinern, bei gleichzeitiger Verbesserung der Strahlbreite des auf den Schirm auftreffenden Lichtbündels gegenüber dem in die Transformation einlaufenden Lichtbündels um einen Faktor 5.

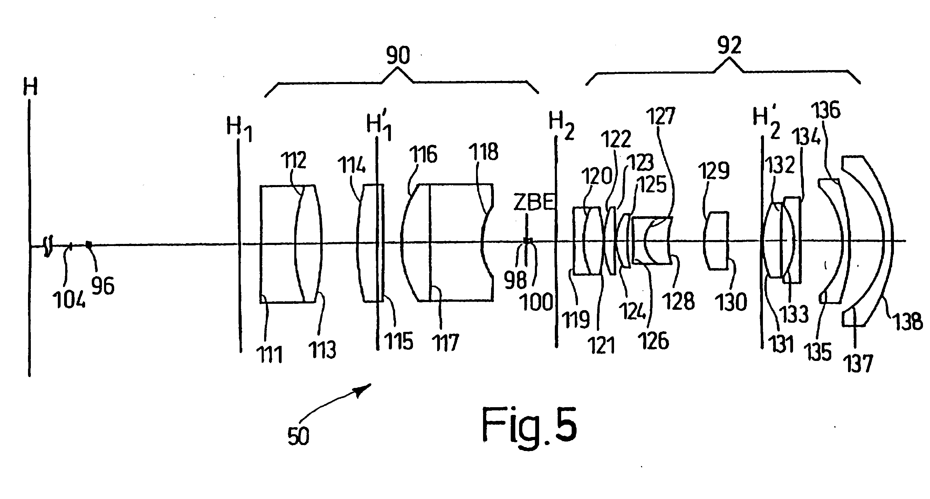

Das Linsensystem der Fig. 4 ist nochmals in Fig. 5 detaillierter dargestellt, wobei auch die objektseitige Hauptebene $H_1$ und die bildseitige Hauptebene $H_1'$ der ersten optischen Stufe 90 angegeben sowie die objektseitige Hauptebene $H_2$ und die bildseitige Hauptebene $H_2'$ der zweiten optischen Stufe 92 dargestellt sind. Mit H ist die objektseitige Hauptebene der gesamten Transformationsoptik 50 bezeichnet.

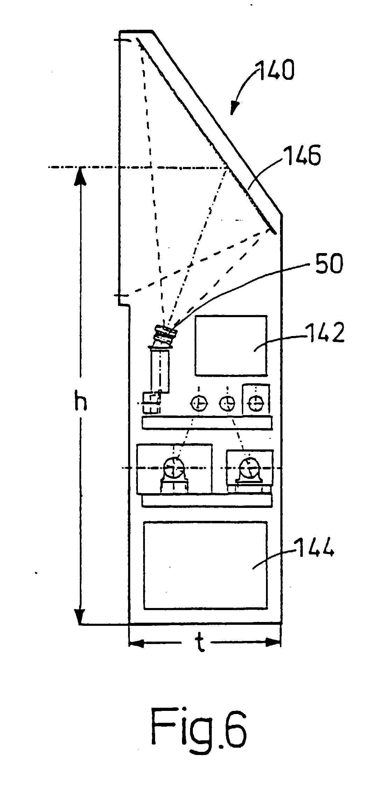

Dabei ist die Position der Hauptebene H aber nicht maßstäblich eingezeichnet, vielmehr ist bei der praktischen Auslegung einer Transformationsoptik gemäß Fig. 6 die Hauptebene H von der Hauptebene $H_1$ der ersten optischen Stufe mehrere Meter entfernt angeordnet.

Die Eintrittspupille 104 liegt nicht sehr weit vom objektseitigen Brennpunkt 96 der ersten Stufe 90 entfernt und zwar zwischen diesem und der Hauptebene H der gesamten Transformationsoptik 50, womit die Verhältnisse denen aus Fig. 2 ähnlich sind. Der Abstand zwischen dem bildseitigen Brennpunkt 98 der ersten optischen Stufe 90 und dem objektseitigen Brennpunkt 100 der zweiten optischen Stufe 92 ist zur Verwirklichung des in Fig. 2 dargestellten Prinzips klein und liegt unterhalb von 1 mm.

In Fig. 5 sind die einzelnen Linsenflächen mit Bezugsziffern 111 bis 138 versehen. Die physikalischen Dimensionen der Transformationsoptik 50 aus Fig. 5 sind in der im Anhang beigefügten Tabelle angegeben. In der Tabelle bezeichnen D den Abstand zwischen den beiden jeweils angegebenen Flächen (gemessen auf der optischen Achse), N den Brechungsindex und $\nu$ die aus einer mittleren Brechzahl und der Grunddispersion abgeleitete Abbé'sche Zahl. Wenn in der Tabelle ein Brechungsindex von 1 ohne Angabe von $\nu$ eingetragen ist, handelt es sich um einen Zwischenraum zwischen den Linsen.

In Fig. 6 ist ein Projektionssystem 140 gezeigt, das nach dem Prinzip des Ausführungsbeispiels von Fig. 1 mit der beschriebenen Transformationsoptik 50 aufgebaut ist. Neben den schon beschriebenen Komponenten sind in dem Projektionssystem 140 auch Einrichtungen 142 und 144 vorgesehen, welche die zum Erzeugen eines Videobilds erforderliche Elektronik, die nicht im einzelnen dargestellt ist, enthalten. Das Projektionssystem 140 weist eine Bilddiagonale von 200 cm auf, wobei die Höhe h des Gerätes bis zur Mitte des Bildschirms 1,5 m und die Gerätetiefe nur 60 cm beträgt. Diese geringe Gerätetiefe im Verhältnis zur Bildschirmgröße ist auf die verwendete Transformationsoptik 50 wie auch auf einen Spiegel 146 zurückzuführen, der den Strahlabstand vom Bildschirm zur Ablenkeinheit ebenfalls vergrößert. Die Transformationsoptik 50 verkürzt dabei die Länge zwischen der Ablenkeinheit und dem Bildschirm (wie vorstehend beschrieben) um den Faktor 5. Das bedeutet, daß im Beispiel von Fig. 6 ohne Einsatz der erfindungsgemäßen Transformationsoptik 50 Lichtwege von mehr als 5 m vorgesehen werden müßten, um ein ähnlich großes Bild zu erhalten.

Neben den vorstehenden Dimensionsbetrachtung sollte man sich aber auch vor Augen halten, daß das Projektionssystem 140 zusätzlich zu der erfreulichen Längenverkürzung auch noch eine bessere Fokussierung ermöglicht, wie dies anhand von Fig. 2 beispielhaft dargestellt wurde, was einen zusätzlichen Vorteil bringt, der mit bekannten Systemen nicht erreichbar ist.

Für eine weitere Verbesserung könnten auch mehrere solche Transformationsoptiken 50 hintereinander geschaltet werden, wobei jeweils zwei Stufen mit einem Faktor im Verhältnis ihrer Brennweiten zum Tangensverhältnis beitragen. Es ist aber auch möglich, eine einzige Transformationsoptik 50 mit mehr als zwei Stufen auszustatten, wobei die Anzahl der eingesetzten Stufen nicht geradzahlig sein muß.

Anhang

Tabelle

| Flächennummer | Krümmungsradius (mm) | zwischen den Flächen | D (mm) | N | ν |
|---|---|---|---|---|---|
| 111 | - 665 | 111-112 | 10 | 1,6522 | 33,6 |
| 112 | 46 | 112-113 | 8 | 1,6225 | 63,2 |
| 113 | - 65 | 113-114 | 10 | 1 | |
| 114 | 66 | 114-115 | 8 | 1,6225 | 63,2 |
| 115 | - 489 | 115-116 | 5 | 1 | |
| 116 | 31 | 116-117 | 8 | 1,6225 | 63,2 |
| 117 | 727 | 117-118 | 15 | 1,6241 | 36,1 |
| 118 | 18 | 118-119 | 26 | 1 | |
| 119 | 164 | 119-120 | 3 | 1,7343 | 28,5 |
| 120 | 20 | 120-121 | 6 | 1,6254 | 56,6 |
| 121 | - 37 | 121-122 | 0,1 | 1 | |
| 122 | 24 | 122-123 | 4 | 1,6225 | 63,2 |
| 123 | - 156 | 123-124 | 0,1 | 1 | |
| 124 | 13 | 124-125 | 3 | 1,6225 | 63,2 |
| 125 | 33 | 125-126 | 2 | 1 | |
| 126 | - 57 | 126-127 | 3 | 1,6241 | 36,1 |
| 127 | 8 | 127-128 | 6 | 1,5749 | 57,3 |
| 128 | 18 | 128-129 | 10 | 1 | |
| 129 | 19 | 129-130 | 7 | 1,5749 | 57,3 |
| 130 | - 832 | 130-131 | 10 | 1 | |
| 131 | 25 | 131-132 | 5 | 1,7343 | 28,5 |
| 132 | 104 | 132-133 | 4 | 1 | |
| 133 | - 17 | 133-134 | 2 | 1,6522 | 33,6 |
| 134 | - 307 | 134-135 | 12 | 1 | |
| 135 | - 21 | 135-136 | 2 | 1,5187 | 64,0 |
| 136 | - 50 | 136-137 | 10 | 1 | |
| 137 | - 24 | 137-138 | 2 | 1,5187 | 64,0 |
| 138 | - 40 | | | | |

**Patentansprüche**

1. Projektionssystem zum Projizieren eines aus Bildpunkten aufgebauten Videobildes auf einen Schirm (54) mit mindestens einer ein Lichtbündel aussendenden, in ihrer Intensität veränderbaren Lichtquelle (10; 20; 30) und einer Ablenkeinrichtung (44, 46), die das Lichtbündel zur Beleuchtung der Bildpunkte in zwei verschiedenen Richtungen auf dem Schirm (54) ablenkt, **dadurch gekennzeichnet**, daß eine mindestens zweistufige Transformationsoptik (50) zur Vergrößerung des Videobildes zwischen Ablenkeinrichtung (44, 46) und Schirm (54) angeordnet ist, die nach der Tangensbedingung

$$\tan \theta' = K \tan \theta,$$

mit θ dem Winkel des in die Transformationsoptik einlaufenden und θ' dem Winkel des aus der Transformationsoptik auslaufenden Lichtbündels und K > 1, verzeichnungsfrei korrigiert ist.

2. Projektionssystem nach Anspruch 1, dadurch gekennzeichnet, daß zwischen Transformationsoptik (50) und Schirm (54) eine Feldlinse angeordnet ist.

3. Projektionssystem nach Anspruch 2, dadurch gekennzeichnet, daß die Feldlinse eine Fresnellinse (52) ist.

4. Projektionssystem nach Anspruch 3, dadurch gekennzeichnet, daß das durch die Transformationsoptik erzeugte Bild der Ablenkeinrichtung im Brennpunkt der Fresnellinse (52) oder in einem Abstand von ± 20% des Wertes der Brennweite der Fresnellinse (52) von deren Brennpunkt entfernt liegt.

5. Projektionssystem nach Anspruch 3 oder 4, dadurch gekennzeichnet, daß die Fresnellinse (52) eine der Transformationsoptik (50) zugewandte plane Fläche aufweist.

6. Projektionssystem nach einem der Ansprüche 1 bis 5 mit einer der Transformationsoptik zugeordneten objektseitigen Hauptebene (H), dadurch gekennzeichnet, daß die Ablenkeinrichtung (44, 46) zwischen der objektseitigen Hauptebene der Transformationsoptik und einem ersten objektseitigen Linsenscheitel (111) der Transformationsoptik (50) angeordnet ist.

7. Transformationsoptik zur Verwendung in einem Projektionssystem nach einem der Ansprüche 1 bis 6 zum Projizieren eines aus Bildpunkten aufgebauten Videobildes auf einen Schirm (54) mit mindestens einer ein Lichtbündel aussendenden, in ihrer Intensität veränderbaren Lichtquelle (10; 20; 30) und einer Ablenkeinrichtung (44, 46), die das Lichtbündel zur Beleuchtung der Bildpunkte in zwei verschiedenen Richtungen auf dem Schirm (54) ablenkt, dadurch gekennzeichnet, daß sie mindestens zwei optische Stufen (90, 92) umfaßt, wobei die erste optische Stufe eine Zwischenbildebene (94) erzeugt, die durch die nachfolgenden optischen Stufen (92) auf den Schirm (54) abgebildet wird, und daß die Transformationsoptik nach der Tangensbedingung

$$\tan \theta' = K \tan \theta,$$

mit θ dem Winkel des in die Transformationsoptik einlaufenden und θ' dem Winkel des aus der Transformationsoptik auslaufenden Lichtbündels und K > 1, verzeichnungsfrei korrigiert ist.

8. Transformationsoptik nach Anspruch 7, dadurch gekennzeichnet, daß die Zwischenbildebene (94) bei parallelem Lichteinfall einen bildseitigen Brennpunkt der ersten optischen Stufe enthält.

9. Transformationsoptik nach Anspruch 7 oder 8, dadurch gekennzeichnet, daß die zweite optische Stufe (92) eine Brennweite aufweist, die kleiner als die Hälfte der Brennweite der ersten optischen Stufe (90) ist.

10. Transformationsoptik nach Anspruch 9, dadurch gekennzeichnet, daß die Brennweite der zweiten optischen Stufe (92) kleiner als 1/5 der Brennweite der ersten optischen Stufe (90) ist.

11. Transformationsoptik nach einem der Ansprüche 7 bis 10, mit einer objektseitigen Hauptebene (H) und einem objektseitigen Brennpunkt (96) der ersten optischen Stufe (90), dadurch gekennzeichnet, daß die objektseitige Hauptebene (H) der Transformationsoptik (50) außerhalb eines ersten Linsenscheitels (111) und der objektseitige Brennpunkt (96) der ersten optischen Stufe (90) zwischen der objektseitigen Hauptebene (H) und dem ersten Linsenscheitel (111) liegt.

12. Transformationsoptik nach einem der Ansprüche 7 bis 11, dadurch gekennzeichnet, daß die erste optische Stufe (90) und die zweite optische Stufe (92) aus mehrlinsigen Anordnungen bestehen.

13. Transformationsoptik nach einem der Ansprüche 7 bis 12, mit Zwischenbildebenen zwischen den einzelnen optischen Stufen, dadurch gekennzeichnet, daß jede Zwischenbildebene (94) zwischen einem letzten Linsenscheitel (118) einer optischen Stufe (90) und einem ersten Linsenscheitel (119) der nachfolgenden optischen Stufe (92) liegt.

## Claims

1. A projection system for projecting a video image built up from image dots, on to a screen (54), comprising at least one variable-intensity light source (10; 20; 30) emitting a beam of light, and a deflection device (44, 46) which deflects the beam of light in two different directions on the screen (54) in order to illuminate the image dots, characterised in that an at least two-stage transformation optical system (50) for enlarging the video image is disposed between the deflection device (44, 46) and the screen (54), which optical system is corrected so as to be distortion-free in accordance with the tangent condition:

$$\tan \Theta' = K \tan \Theta,$$

where $\Theta$ is the angle of the beam of light entering the transformation optical system and $\Theta'$ is the angle of the beam of light leaving the transformation optical system, and K>1.

2. A projection system according to claim 1, characterised in that a field lens is disposed between the transformation optical system (50) and the screen (54).

3. A projection system according to claim 2, characterised in that the field lens is a Fresnel lens (52).

4. A projection system according to claim 3, characterised in that the image of the deflection device produced by the transformation optical system is situated at the focal point of the Fresnel lens (52) or at a distance of ± 20% of the value of the focal length of the Fresnel lens (52) from its focal point.

5. A projection system according to claim 3 or 4, characterised in that the Fresnel lens (52) has a flat surface facing the transformation optical system (50).

6. A projection system according to any one of claims 1 to 5, with a principal plane (H) associated with the transformation optical system on the object side, characterised in that the deflection device (44, 46) is disposed between the principal plane of the transformation optical system on the object side and a first lens vertex (111) of the transformation optical system (50) on the object side.

7. A transformation optical system for use in a projection system according to any one of claims 1 to 6, for projecting a video image built up from image dots, on to a screen (54), comprising at least one variable-intensity light source (10; 20; 30) emitting a beam of light, and a deflection device (44, 46) which deflects the beam of light in two different directions on the screen (54) in order to illuminate the image dots, characterised in that it comprises at least two optical stages (90, 92), the first optical stage producing an intermediate image plane (94) which is imaged on the screen (54) by the following optical stages (92), and in that the transformation optical system is corrected so as to be distortion-free in accordance with the tangent condition:

$$\tan \Theta' = K \tan \Theta,$$

where $\Theta$ is the angle of the beam of light entering the transformation optical system and $\Theta'$ is the angle of the beam of light leaving the transformation optical system, and K>1.

8. A transformation optical system according to claim 7, characterised in that the intermediate image plane (94) contains a focal point of the first optical stage on the image side in the event of parallel light incidence.

9. A transformation optical system according to claim 7 or 8, characterised in that the second optical stage (92) has a focal length which is less than half the focal length of the first optical stage (90).

10. A transformation optical system according to claim 9, characterised in that the focal length of the second optical stage (92) is less than 1/5 of the focal length of the first optical stage (90).

11. A transformation optical system according to any one of claims 7 to 10, comprising a principal plane (H) on the object side and a focal point (96) of the first optical stage (90) on the object side, characterised in that the principal plane (H) of the transformation optical system (50) on the object side is situated outside a first lens vertex (111) and the focal point (96) of the first optical stage (90) on the object side is situated between the principal plane (H) on the object side and the first lens vertex (111).

12. A transformation optical system according to any one of claims 7 to 11, characterised in that the first optical stage (90) and the second optical stage (92) consist of multi-lens arrangements.

13. A transformation optical system according to any one of claims 7 to 12, with intermediate image planes between the individual optical stages, characterised in that each intermediate image plane (94) is situated between a final lens vertex (118) of an optical stage (90) and a first lens vertex (119) of the following optical stage (92).


**Revendications**

1. Système de projection, pour assurer la projection d'une image vidéo constituée de points image, sur un écran (54), comportant au moins une source lumineuse (10 ; 20 ; 30), émettant un faisceau lumineux et dont l'intensité est modifiable, et un dispositif déviateur (44 ; 46), qui dévie le faisceau lumineux sur l'écran (54), en vue d'illuminer les points image, la déviation se faisant dans deux directions différentes, caractérisé en ce qu'une optique de transformation (50) à au moins deux étages, conçue pour agrandir l'image vidéo, est disposée entre le dispositif déviateur (44 ; 46) et l'écran (54) et corrige sans produire de distorsions selon la condition pour la tangente :

$$\tan \theta' = K \tan \theta,$$

θ étant l'angle du faisceau lumineux entrant dans l'optique de transformation et θ' étant l'angle du faisceau lumineux sortant de l'optique de transformation, et K > 1.

2. Système de projection selon la revendication 1, caractérisé en ce qu'une lentille de champ est disposée entre l'optique de transformation (50) et l'écran (54).

3. Système de projection selon la revendication 2, caractérisé en ce que la lentille de champ est une lentille de Fresnel (52).

4. Système de projection selon la revendication 3, caractérisé en ce que l'image, générée par l'optique de transformation, du dispositif déviateur est située au foyer de la lentille de Fresnel (52) ou bien éloignée de son foyer, d'une distance de plus ou moins 20 % de la valeur de la distance focale de la lentille de Fresnel (52).

5. Système de projection selon la revendication 3 ou 4, caractérisé en ce que la lentille de Fresnel (52) présente une surface plane tournée vers l'optique de transformation (50).

6. Système de projection selon l'une des revendications 1 à 5, avec un plan principal (H), situé côté objectif et associé à l'optique de transformation, caractérisé en ce que le dispositif déviateur (44 ; 46) est disposé entre le plan principal, situé côté objet, de l'optique de transformation et un premier front de lentille (111), situé côté objet, de l'optique de transformation (50).

7. Optique de transformation, pour un système de projection selon l'une des revendications 1 à 6, pour assurer la projection d'une image vidéo constituée de points image, sur un écran (54), comportant au moins une source lumineuse (10 ; 20 ; 30), émettant un faisceau lumineux et dont l'intensité est modifiable, et un dispositif déviateur (44 ; 46), qui dévie le faisceau lumineux en vue d'illuminer les points image, la déviation se faisant dans deux directions différentes, sur l'écran (54), caractérisée en ce qu'elle comprend au moins deux étages optiques (90, 92), le premier étage générant un plan image intermédiaire (94), représenté sur l'écran (54) en passant par les étages optiques (92) aval, et en ce que l'optique de transformation corrige sans produire de distorsions selon la condition pour la tangente

$$\tan \theta' = K \tan \theta,$$

θ étant l'angle du faisceau lumineux entrant dans l'optique de transformation et θ' étant l'angle du faisceau lumineux sortant de l'optique de transformation, et K > 1.

**8.** Optique de transformation selon la revendication 7, caractérisée en ce que le plan image intermédiaire (94) contient, lorsque l'incidence de la lumière se fait par des rayons parallèles, un foyer côté image du premier étage optique.

**9.** Optique de transformation selon la revendication 7 ou la revendication 8, caractérisée en ce que le deuxième étage optique (92) présente une distance focale inférieure à la moitié de la distance focale du premier étage optique (90).

**10.** Optique de transformation selon la revendication 9, caractérisée en ce que la distance focale du deuxième étage optique (92) est inférieur à 1/5 de la distance focale du premier étage optique (90).

**11.** Optique de transformation selon l'une des revendications 7 à 10, comportant un plan principal (H) situé côté objectif et un foyer (96), situé côté objet, du premier étage optique (90), caractérisé en ce que le plan principal (H) situé côté objet de l'optique de transformation (50) est situé à l'extérieur d'un premier front de lentille (111) et que le foyer (96), situé côté objet du premier étage optique (90) est situé entre le plan principal (H) situé côté objet et le premier front de lentille (111).

**12.** Optique de transformation selon l'une des revendications 7 à 11, caractérisée en ce que le premier étage optique (90) et le deuxième étage optique (92) sont constitués de dispositifs à plusieurs lentilles.

**13.** Optique de transformation selon l'une des revendications 7 à 12, avec des plans image intermédiaires situés entre les différents étages optiques, caractérisée en ce que chaque plan image intermédiaire (94) est situé entre le dernier front de lentille (118) d'un étage optique (90) et le premier front de lentille (119) de l'étage optique (92) subséquent.

Fig.1

Fig.2

Fig.3

Fig.4

Fig.5

EP 0 662 274 B1

Fig.6